Europäisches Patentamt

European Patent Office

Office européen des brevets

(19)

(11) Veröffentlichungsnummer: **0 195 438**
**A2**

(12) ## EUROPÄISCHE PATENTANMELDUNG

(21) Anmeldenummer: 86103728.1

(22) Anmeldetag: 19.03.86

(51) Int, Cl.⁴: **G 01 B 5/00**

(30) Priorität: 21.03.85 DE 3510281

(43) Veröffentlichungstag der Anmeldung:
24.09.86 Patentblatt 86/39

(84) Benannte Vertragsstaaten:
DE FR GB IT SE

(71) Anmelder: APPLIED POWER INC.
P.O.Box 325
Milwaukee Wisconsin 53201(US)

(72) Erfinder: Cacciatori, Gianfranco
Via Corrobiolo, 45
I-37066 Sommacampagna (Verona)(IT)

(74) Vertreter: Franke, Karl Wilhelm, Dr.
Steinsdorfstrasse 10
D-8000 München 22(DE)

(54) **Mutternhalter.**

(57) Gegenstand der Erfindung ist ein Mutternhalter, der es ermöglicht, eine Vielzahl von Muttern an Öffnungen in einem Profilträger heranzubringen, der Teil einer Prüf- oder Richtbank für Kraftfahrzeuge ist und bei seinem Einsatz im Rahmen der Überprüfung bzw. der Reparatur eines unfallbeschädigten Kraftfahrzeugs mit Aufbauten versehen werden soll, indem in die Muttern durch die Öffnungen hindurch Schrauben eingeschraubt werden, welche diese Aufbauten an einem bestimmten Platz festhalten.

Dazu besteht der Mutternhalter gemäß der Erfindung aus einer Profilschiene (1), die im Querschnitt die Form eines Mäanders aus einem verbindenden ebenen Mittelteil (1a) und zwei an dessen beiden Seiten daran anschließenden Randteilen (1b, 1c) aus U-Profilen mit in der Ebene des Mittelteils liegender Öffnung und dazu parallelem Mittelsteg aufweist. Die beiden Randteile (1b, 1c) enthalten Aufnahmen für die Muttern (2) und weisen jeder eine den Abmessungen der aufzunehmenden Muttern (2) entsprechende lichte Weite auf. Der Mittelteil (1a) ist in seiner Breite auf den Seitenabstand zwischen der Öffnungen (3) im Profilträger (4) abgestimmt. Für die Verbindung von Profilschiene (1) und Profilträger (4) sind Schrauben (9) vorgesehen, die Bohrungen (11) im Profilträger (4) hindurchgehen und in korrespondierende Bohrungen (10) in der Profilschiene (1) eingreifen. Insgesamt ist die Profilschiene (1) als einheitlicher Formkörper aus Metall oder aus Kunststoff hergestellt.

Fig. 1

EP 0 195 438 A2

P 115/654 Dr.F/F

APPLIED POWER INC.

Milwaukee, Wisconsin 53201 (V.St.A.)


Mutternhalter


Die Erfindung betrifft einen an bzw. auf einem Profilträger
einer Prüf- und/oder Richtbank für Kraftfahrzeuge festlegbaren
Mutternhalter aus einer Profilschiene mit dem Profilträger angepaßten Außenabmessungen und einer Mehrzahl von mit Öffnungen
im Profilträger korrespondierenden Aufnahmen für jeweils eine zum
Zusammenwirken mit einer in die jeweilige Öffnung im Profilträger
einführbaren Schraube bestimmte Mutter.

Prüf- und Richtbänke, wie sie bei der Überprüfung bzw. bei der
Reparatur unfallbeschädigter Kraftfahrzeuge Verwendung finden,
besitzen Längs- und Querträger, die als Profilträger ausgebildet
sind und auf ihrer Oberseite regelmäßig verteilt angeordnete
Löcher aufweisen, an denen mit Hilfe von Schrauben weitere Bauelemente in genau definierter Lage festgelegt werden können. Diese
Schrauben müssen dabei mit Muttern zum Zusammenwirken gebracht
werden, die unterhalb der Löcher in der Oberseite der Profilträger
in entsprechender Anzahl vorzuhalten sind.

Dabei ergeben sich nun abgesehen von der großen Anzahl solcher
Muttern häufig auch dadurch Schwierigkeiten, daß die Stellen
unterhalb oder auch innerhalb der Profilträger, an denen die
Muttern vorgesehen werden müssen, schlecht oder auch gar nicht von
Hand zu erreichen sind. Soweit also die Muttern nicht schon bei
der Herstellungder jeweiligen Profilträger daran befestigt werden,
was vor allem auch aus Gründen ihrer Austauschbarkeit bei einer
Gewindebeschädigung unvorteilhaft ist, bedarf es daher des Einsatzes eigener Mutternhalter, mit denen sich die Muttern an ihren
jeweiligen Einsatzort unterhalb oder innerhalb der Profilträger
verbringen und dort festhalten lassen.

Ein Beispiel für einen solchen Mutternhalter ist in der DE-PS 29 14 333 beschrieben. Dieser bekannte Mutternhalter besteht aus einer Profilschiene von U-förmigem Querschnitt, die sich in einen hohlkastenförmigen Querträger einer Prüfbank einschieben läßt und in ihrem Mittelsteg eine mit Löchern in der Oberseite dieses Querträgers korrespondierende Folge von Löchern enthält, an deren jedem mit Hilfe einer gesonderten elastischen Halteklammer eine Mutter festgelegt werden kann, in die sich dann durch das entsprechende Loch in der Querträgeroberseite hindurch eine Schraube einschrauben läßt.

Diese bekannte Konstruktion für einen Mutternhalter ermöglicht zwar die Einführung einer Vielzahl von Muttern in den jeweiligen Profilträger der Prüfbank, und sie gestattet auch einen Austausch einzelner Muttern im Falle ihrer Beschädigung, sie vermag jedoch in der Praxis nicht zu befriedigen, was die Lagesicherheit der einzelnan Muttern auf der Profilschiene anbelangt, da die Muttern gegen Axialverschiebung und gegen Rotation allein durch ihre Halteklammer gesichert sind und diese keine größeren Belastungen aufzunehmen vermag.

Der Erfindung liegt daher die Aufgabe zugrunde, einen Mutternhalter der eingangs erwähnten Art so auszubilden, daß er bei leichter und rascher Lösbarkeit und Austauschbarkeit der Muttern deren sicheres Festhalten auch unter der Einwirkung größerer Kräfte und insbesondere Drehmomente zu gewährleisten vermag.

Die gestellte Aufgabe wird gemäß der Erfindung dadurch gelöst, daß die Profilschiene im Querschnitt die Form eines Mäanders aus einem verbindenden ebenen Mittelteil und zwei an dessen beiden Seiten daran anschließenden Randteilen aus U-Profilen mit in der Ebene des Mittelteils liegender Öffnung und dazu parallelem Mittelsteg aufweist, von denen die beiden Randteile die Aufnahmen für die Muttern enthalten und jeder eine den Abmessungen der aufzunehmenden Muttern entsprechende lichte Weite aufweist, während der Mittelteil in seiner Breite auf den Seitenabstand zwischen den Öffnungen im Profilträger abgestimmt ist.

Die erfindungsgemäße Ausbildung des Mutternhalters bietet den in die jeweiligen Aufnahmen eingebrachten Muttern, ohne daß diese irgendwie besonders gestaltet sein oder mit zusätzlichen Halte-elementen ausgestattet oder kombiniert werden müßten, vollkommene Verdrehungssicherheit durch die fluchtende Anlage von Seitenflächen der Muttern an den Seitenstegen der U-Profile der Randteile der Profilschiene. Auch Querverschiebungen der Muttern werden so vermieden, während die Form der Aufnahmen jede Längsverschiebung der Muttern entlang der Randteile der Profilschiene ausschließt. Dessenungeachtet lassen sich etwa im Betrieb beschädigte Muttern einfach und rasch von der Profilschiene abheben und ersetzen. Insgesamt stellt somit der erfindungsgemäß ausgebildete Mutternhalter ein robustes und bequem handhabbares Instrument zur Einbringung einer Vielzahl von Muttern in oder unter einen gelochten Profilträger einer Prüfbank oder einer Richtbank für Kraftfahrzeuge dar.

Vorteilhafte Ausgestaltungen und Weiterbildungen der Erfindung ergeben sich im einzelnen aus den Unteransprüchen. Insbesondere sind für die Gestaltung der Aufnahmen für die Muttern in weiterer Ausbildung der Erfindung zwei Ausführungen bevorzugt; entweder können aus dem Mittelsteg der Randteile der Profilschiene quer zu deren Längsrichtung Zungenpaare aufgebogen sein, die jeweils eine Mutter federnd zwischen sich festhalten, oder es sind in den Mittelstegen der Randteile der Profilschiene Ausnehmungen vorgesehen, in die entsprechend geformte Ansätze der Muttern eingreifen. Für die Festlegung des Mutternhalters insgesamt in oder an dem Profilträger der Prüf- oder Richtbank dienen in bevorzugter Ausführung Schrauben mit selbstschneidendem Gewinde, die durch Bohrungen im Profilträger hindurch in korrespondierende Bohrungen im Mittelteil der Profilschiene eingreifen und so Profilträger und Profilschiene zusammenhalten. Die Profilschiene selbst ist bevorzugt als einheitlicher Formkörper aus Metall oder aus Kunststoff ausgebildet.

Für die weitere Erläuterung der Erfindung und ihrer Vorteile wird nunmehr auf die Zeichnung Bezug genommen, in der bevorzugte Ausführungsbeispiele für die Erfindung veranschaulicht sind; im einzelnen zeigen in der Zeichnung:

Fig. 1 einen teilweise in einen Profilträger einer Prüf- oder Richtbank eingeschobenen Mutternhalter nach einer ersten Ausführungsform der Erfindung in perspektivischer Darstellung,

Fig. 2 einen Ausschnitt aus einem Randteil des Mutternhalters von Fig. 1 in größerem Maßstab in einer teilweise aufgebrochenen Seitenansicht und einer Draufsicht,

Fig. 3 den Ausschnitt von Fig. 2 in nochmals größerem Maßstab in perspektivischer Darstellung,

Fig. 4 einen teilweise in einen Profilträger einer Prüf- oder Richtbank eingeschobenen Mutternhalter nach einer zweiten Ausführungsform der Erfindung in perspektivischer Darstellung und

Fig. 5 einen Ausschnitt aus einem Randteil des Mutternhalters von Fig. 4 in größerem Maßstab in einer teilweise aufgebrochenen Seitenansicht und einer Draufsicht.

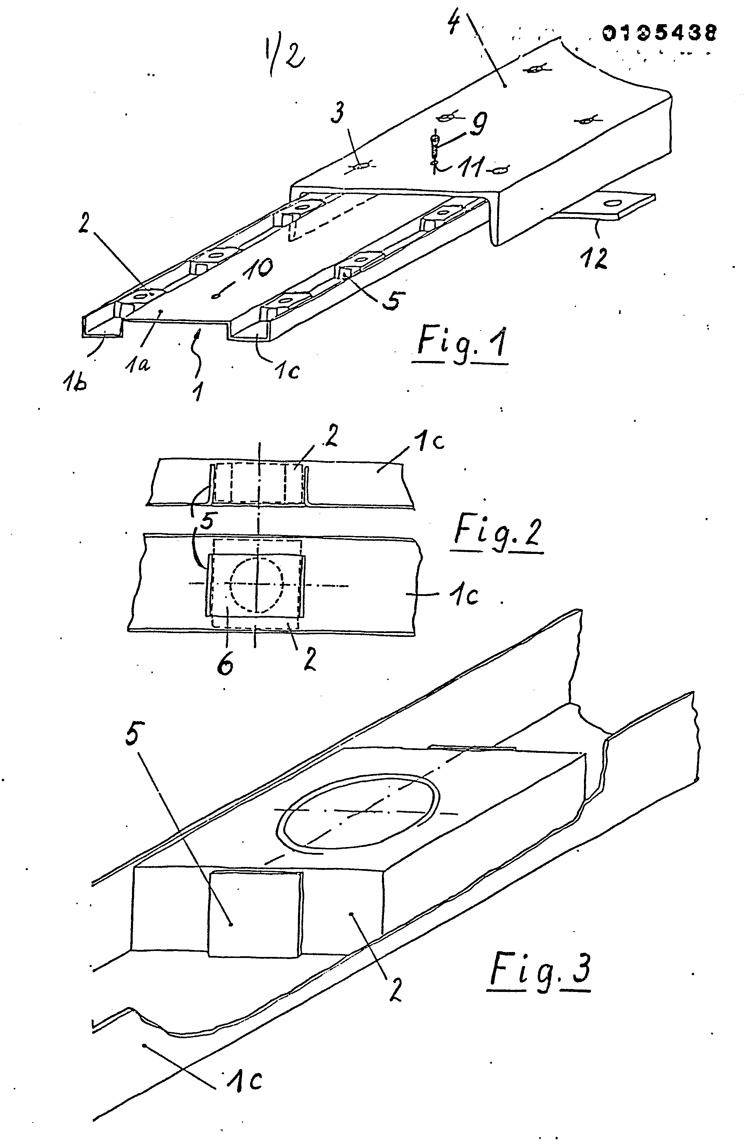

Der in Fig. 1 dargestellte Mutternhalter wird durch eine Profilschiene 1 gebildet, die in der Zeichnung teilweise in einen durch ein nach unten offenes U-Profil gebildeten Profilträger 4, der beispielsweise ein Querträger einer Prüf- oder Richtbank für Kraftfahrzeuge sein kann, eingeschoben ist. Diese Profilschiene 1 dient als Halter für eine Vielzahl von im Außenumriß quadratisch geformten Muttern 2, von denen jede einer bestimmten Öffnung 3 im oberen Mittelsteg des Profilträgers 4 zugeordnet ist, durch die hindurch jeweils eine in der Zeichnung nicht eigens dargestellte Schraube in die betreffende Mutter 2 eingeschraubt werden kann, um irgendwelche Bauelemente auf dem Profilträger 4 in definierter festzulegen, wie dies im Rahmen von Prüf- oder Richtarbeiten an einem Kraftfahrzeug erforderlich werden kann.

Im Querschnitt weist die Profilschiene 1 die Form eines Mäanders auf, der dadurch entsteht, daß an einen ebenen Mittelteil 1a auf dessen beiden Seiten je ein Randteil 1b bzw. 1c aus einem nach oben offenen U-Profil in der Weise anschließt, daß die Öffnungen der U-Profile in der Ebene des Mittelteils 1a liegen und die unteren Mittelstege der U-Profile parallel zu dieser Ebene verlaufen. Die lichte Weite der die Randteile 1b und 1c bildenden U-Profile ist so bemessen, daß die Muttern 2 fluchtend an den Seitenstegen der Randteile 1b und 1c zur Anlage kommen, was eine Verdrehung der Muttern 2 in den U-Profilen und auch ihre Verschiebung quer zur Längsrichtung der Profilschiene 1 ausschließt. Bei dem dargestellten Fall mit quadratischem Umriß der Muttern 2 liegen diese jeweils mit einer vollen Seitenfläche an den Seitenstegen von innen an, doch läßt sich eine äquivalente Wirkung auch an Sechskantmuttern erzielen, bei denen sich die Anlage auf zwei einander gegenüberliegende Sechskantflächen beschränkt.

Die genaue Lage der einzelnen Muttern 2 entlang der Randteile 1b und 1c in Entsprechung zu den Öffnungen 3 im Profilträger 4 wird durch entsprechende Aufnahmen bestimmt, die bei dem Ausführungsbeispiel nach Fig. 1 bis 3 durch Paare von Zungen 5 gebildet werden, die aus dem Mittelsteg der U-Profile der Randteile 1b und 1c jeweils im mittleren Bereich von dessen Breite ausgeschnitten und bis zu zur Längsrichtung der Profilschiene 1 senkrechtem Verlauf nach oben umgebogen sind. Zwischen den beiden Zungen 5 jedes Paares entsteht auf diese Weise im Mittelsteg der U-Profile der Randteile 1b und 1c je eine Öffnung 6, deren Größe, wie insbesondere aus der Darstellung in Fig. 2 ersichtlich ist, kleiner ist als die der Muttern 2, die so dank der Eigenelastizität des Zungenmaterials federnd auf dem Mittelsteg der Randteile 1b bzw. 1c festgehalten werden.

Als Befestigungselemente zum Festhalten der Profilschiene 1 unterhalb des Profilträgers 4 dienen Schrauben 9, von denen in der Zeichnung nur eine dargestellt ist und die jede durch eine Bohrung 11 im Mittelsteg des Profilträgers 4 hindurch mit selbstschneidendem Gewinde in eine korrespondierende Bohrung 10 im Mittelteil 1a der Profilschiene 1 eingeschraubt werden können.

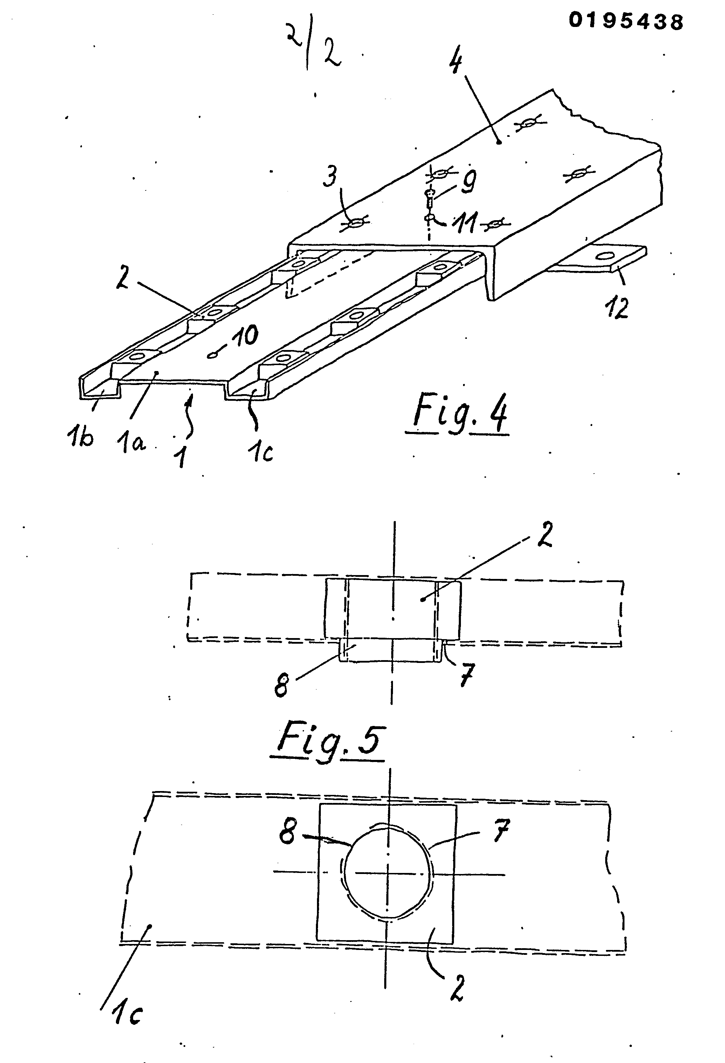

Bei dem in Fig. 4 und 5 dargestellten zweiten Ausführungsbeispiel ist die den Mutternhalter bildende Profilschiene 1 im wesentlichen und insbesondere in ihrem Querschnitt in analoger Weise wie bei dem Ausführungsbeispiel nach Fig. 1 bis 3 ausgebildet, so daß insoweit auf die vorstehende Beschreibung dieses ersten Ausführungsbeispiels Bezug genommen werden kann.

Unterschiedlich jedoch ist bei dem Ausführungsbeispiel nach Fig. 4 und 5 die Gestaltung der Aufnahmen für die Festlegung der Muttern 2 entlang der Randteile 1b und 1c der Profilschiene 1, und auch die Muttern 2 sind bei dem zweiten Ausführungsbeispiel nach Fig. 4 und 5 anders gestaltet, indem sie in aus der Darstellung in Fig. 5 ersichtlicher Weise im Anschluß an ihrem wiederum quadratischen Hauptteil einen davon abgesetzten Ansatz 8 von zylindrischer Form aufweisen, mit dem sie in die Aufnahmen bildende Ausnehmungen 7 entsprechender Form und Größe im Mittelsteg der U-Profile der Randteile 1b und 1c der Profilschiene 1 eingreifen und so festgehalten werden.

Übereinstimmung besteht zwischen den beiden Ausführungsbeispielen auch hinsichtlich des Materials für die Profilschiene 1, die in beiden Fällen bevorzugt ein einheitlicher Formkörper aus Metall oder aus Kunststoff ist. Der Mittelteil 1a der Profilschiene 1 ist jeweils so breit bemessen, daß die in die Randteile 1b und 1c eingesetzten Muttern 2 auf den seitlichen Abstand zwischen den Öffnungen 3 im Profilträger 4 eingestellt sind. Der Profilträger 4 selbst wird an der Prüf- oder Richtbank jeweils mit Hilfe von Schrauben befestigt, die am Profilträger 4 angeschweißte Laschen 12, von denen in Fig. 1 und 4 jeweils nur eine sichtbar ist, in entsprechenden Löchern durchqueren.

Patentansprüche
========================

1. An bzw. auf einem Profilträger einer Prüf- und/oder Richtbank
   für Kraftfahrzeuge festlegbarer Mutternhalter aus einer Profilschiene mit dem Profilträger angepaßten Außenabmessungen und
   einer Mehrzahl von mit Öffnungen im Profilträger korrespondierenden Aufnahmen für jeweils eine zum Zusammenwirken mit einer
   in die jeweilige Öffnung im Profilträger einführbaren Schraube
   bestimmte Mutter, dadurch gekennzeichnet, daß die Profilschiene
   (1) im Querschnitt die Form eines Mäanders aus einem verbindenden ebenen Mittelteil (1a) und zwei an dessen beiden Seiten
   daran anschließenden Randteilen (1b, 1c) aus U-Profilen mit in
   der Ebene des Mittelteils liegender Öffnung und dazu parallelem
   Mittelsteg aufweist, von denen die beiden Randteile die Aufnahmen (5; 7) für die Muttern (2) enthalten und jeder eine den
   Abmessungen der aufzunehmenden Muttern entsprechende lichte
   Weite aufweisen, während der Mittelteil in seiner Breite auf
   den Seitenabstand zwischen den Öffnungen (3) im Profilträger
   (4) abgestimmt ist.

2. Mutternhalter nach Anspruch 1, dadurch gekennzeichnet, daß jede
   Aufnahme in den Randteilen (1b, 1c) der Profilschiene (1) durch
   je zwei quer zu deren Längsrichtung einander mit den Mutterabmessungen entsprechendem Abstand gegenüberstehende Zungen (5)
   gebildet ist.

3. Mutternhalter nach Anspruch 2, dadurch gekennzeichnet, daß die
   Zungen (5) unter Freilegung einer Öffnung (6) dazwischen aus
   dem Mittelsteg des jeweiligen Randteils (1b, 1c) heraus über
   einen Teilbereich von dessen Breite hochkant und quer zu
   seiner Längsrichtung umgebogen sind.

4. Mutternhalter nach Anspruch 1, dadurch gekennzeichnet, daß die
   Aufnahmen in den Randteilen (1b, 1c) der Profilschiene (1)
   durch in den jeweiligen Mittelsteg eingearbeitete Ausnehmungen (7) mit Ansätzen (8) der aufzunehmenden Muttern (2) entsprechenden Abmessungen gebildet sind.

5. Mutternhalter nach Anspruch 4, dadurch gekennzeichnet, daß die Ausnehmungen (7) kreisförmige Bohrungen mit dem Durchmesser zylindrischer Ansätze (8) der Muttern (2) entsprechender lichter Weite sind.

6. Mutternhalter nach einem der Ansprüche 1 bis 5, dadurch gekennzeichnet, daß die Profilschiene (1) in ihrem Mittelteil (1a) wenigstens eine mit einer Bohrung (11) im Profilträger (4) korrespondierende Bohrung (10) für die Einführung einer Profilträger und Profilschiene zusammenhaltenden Schraube (9) enthält.

7. Mutternhalter nach einem der Ansprüche 1 bis 6, dadurch gekennzeichnet, daß die Profilschiene (1) als einheitlicher Formkörper aus Metall oder aus Kunststoff ausgebildet ist.

0195438

_Fig. 1_

_Fig. 2_

_Fig. 3_

0195438

_Fig.4_

_Fig.5_